# EUROPÄISCHE PATENTANMELDUNG

(11) **EP 2 042 952 A1**
(43) Veröffentlichungstag der Anmeldung: **01.04.2009**
(21) Anmeldenummer: 07018976.6
(22) Anmeldetag: 26.09.2007
(51) Int. Cl.: G05B 19/042

(54) **Schaltgerätesteuerung, Schaltgerät und Verfahren zur Schaltgerätesteuerung**

(71) Anmelder: SIEMENS AKTIENGESELLSCHAFT, 80333 München (DE)
(72) Erfinder: Moosburger, Martin, 91227 Leinburg (DE); Thomas, Andreas, 91056 Erlangen (DE)

(57) **Zusammenfassung**

Schaltgerätesteuerung (10), insbesondere für ein dezentrales Peripheriesystem, mit mindestens einem Prozessor (11), mindestens einem Speicher (12) für aktuelle Konfigurationen, und mit mindestens einer Schaltgerätkommunikationsschnittstelle (15) ist dadurch gekennzeichnet, dass die Schaltgerätesteuerung (10) ausgebildet ist, eine Peripherieadresse (A3) als nicht bestückt zu identifizieren und in den Speicher (12) für aktuelle Konfigurationen zu speichern, wobei die Adresse (A3) für ein nicht bestücktes Gerät reserviert wird. Ansprüche auch für Schaltgerät und Verfahren zur Schaltgerätesteuerung.

## Beschreibung

Maschinenbauer standardisieren häufig ihre Anwendungen. Damit verbunden soll neben einem gleichartigen Hardwareaufbau auch das Software-Programm der Steuerung immer gleich bleiben. So kann ein Maschinenaufbau modular gestaltet und ohne den früher üblichen, aufwändigen Einzelprojektierungsaufwand realisiert werden.

Fällt in einem derartig gestalteten Maschinenaufbau eine Option, z.B. durch Endkundenwünsche weg, darf weder der Hardware- noch der Softwareaufbau der verbleibenden Optionen verändert werden. Deswegen muss auch das Prozessabbild, d.h. zugeordnete digitale bzw. analoge Ein- und Ausgänge der verbleibenden Peripherie aus einer Gruppe unverändert bestehen bleiben.

Dies ist bei den den Erfindern bekannten Peripheriesystemen nicht möglich.

Aufgabe der Erfindung ist es, eine vereinfachte Steuerung eines Schaltgerätes zu ermöglichen.

Die Aufgabe kann mit einer Schaltgerätesteuerung nach Anspruch 1 bzw. mit einem Verfahren nach Anspruch 7 gelöst werden. Wenn eine Schaltgerätesteuerung mit mindestens einem Prozessor, mindestens einem Speicher für aktuelle Konfigurationen, und mit mindestens einer Schaltgerätkommunikationsschnittstelle ausgebildet ist, eine Peripherieadresse als nicht bestückt zu identifizieren und in den Speicher für aktuelle Konfigurationen zu speichern, wobei die Adresse für eine nicht bestücktes Peripherie reserviert wird, ist es nicht notwendig, ein unbenötigtes Schaltgerät oder einen unbenötigten Motorstarter in das Schaltsystem zu installieren, oder ein physisches Platzhaltemodul einzusetzen. Es ist auch nicht notwendig, eine dynamische Adressenänderung der Peripherien durchzuführen, was eine einfachere Ausführung der Softwareimplementierung in der Schaltgerätesteuerung ermöglicht.

Die Aufgabe kann auch mit einem Schaltgerät nach Anspruch 8 gelöst werden. Wenn ein Schaltgerät mit einer Anzahl von Peripherien und mit einer Schaltgerätesteuerung mit einem Speicher für die Adressierung Peripherien ausgebildet ist, mit einer nicht voll bestückten Peripheriekonfiguration eine statische Adressierung für die Peripherien derart zu benutzen, dass die hardwaremäßig nicht bestückte Adresse oder die hardwaremäßig nicht bestückten Adressen im Speicher als nicht bestückt gekennzeichnet werden, kann eine statische Adressierung auch bei einem nicht hardwaremäßig voll bestückten Schaltgerät ohne physische Platzhaltermodule eingesetzt werden.

Die abhängigen Ansprüche beschreiben vorteilhafte Aspekte der Erfindung.

Wenn die Steuerung mindestens eine Benutzerschnittstelle aufweist, und wobei der Prozessor ausgebildet ist, die Adresse über die Benutzerschnittstelle auswählen zu lassen, kann der Benutzer eine zu konfigurierende Adresse auswählen. Dies ermöglicht das schnellere Testen der Anlage sowie eine schnelle manuelle Konfiguration. Wenn der Prozessor ausgebildet ist, die Adresse als nicht bestückt über die Benutzerschnittstelle auswählen zu lassen, ist es möglich, die Adresse einer nicht benötigten Peripherie als nicht bestückt zu wählen, ohne dass die Adressen der anderen Peripherien in der Anlage geändert werden müssen.

Um eine einfachere Konfiguration zu ermöglichen, kann der Prozessor ausgebildet sein, die Adresse über eine Menüstruktur als nicht bestückt auszuwählen oder auswählen zu lassen.

Es ist aber auch möglich, dass der Prozessor ausgebildet ist, die Adresse als nicht bestückt über die Schaltgerätkommunikationsschnittstelle automatisch zu erkennen. Dies ermöglicht eine automatisierte Konfiguration, wodurch eventuelle Konfigurationsfehler besser vermieden werden können.

Im Folgenden wird die Erfindung unter Bezugnahme auf die in den beigefügten Zeichnungen dargestellten Beispiele näher erläutert.

Es zeigen:
- FIG 1: einige funktionelle Blöcke einer Schaltgerätesteuerung;
- FIG 2: die Adressierung bei einer hardwaremäßig vollständig bestückten Anlage;
- FIG 3: die Adressierung bei einer hardwaremäßig nicht vollständig bestückten Anlage;
- FIG 4: die Adressierung bei einer hardwaremäßig nicht vollständig bestückten Anlage, die ein Platzhaltermodul aufweist;
- FIG 5: die erfindungsgemäße Adressierung bei einer hardwaremäßig nicht vollständig bestückten Anlage; und
- FIG 6: ein Flussdiagram für die Konfiguration bei einer hardwaremäßig nicht vollständig bestückten Anlage.

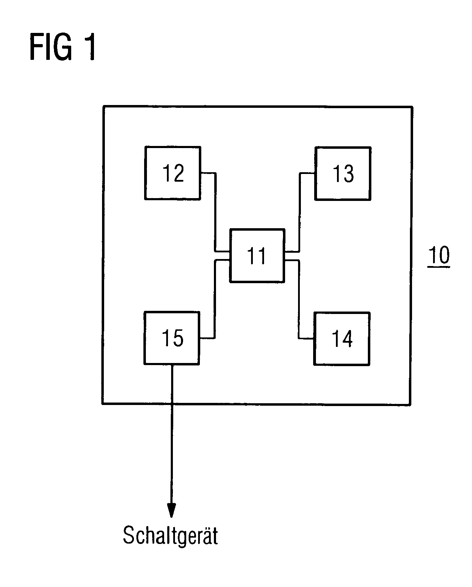

FIG 1 zeigt einige funktionelle Blöcke einer Schaltgerätesteuerung 10. Die Schaltgerätesteuerung 10 weist mindestens einen Prozessor 11, mindestens einen Speicher 12 für aktuelle Konfigurationen, und mindestens eine Schaltgerätnkommunikationsschnittstelle 15 für die Kommunikation mit Schaltgeräten oder Motorstartern auf. Die Schaltgerätnkommunikationsschnittstelle 15 kann mit einem beliebigen drahtgebundenen oder drahtlosen Kommunikationsstandard durchgeführt werden, allerdings sind die gängigsten Möglichkeiten Feld- oder Systembusse, unter anderem der Profibus oder das Ethernet.

Es ist auch wünschenswert, dass die Schaltgerätesteuerung mindestens eine Benutzerschnittstelle 13 für die Wiedergabe der gewählten Hardwareoptionen bzw. für die Eingabe der geänderten Hardwareoptionen aufweist. Die Benutzerschnittstelle kann mit einem Display und einer Tastatur bzw. Maus oder auch mit einem Touch Screen realisiert werden.

Die Schaltgerätesteuerung 10 weist außerdem mindestens einen Speicher 14 für mögliche Konfigurationen auf.

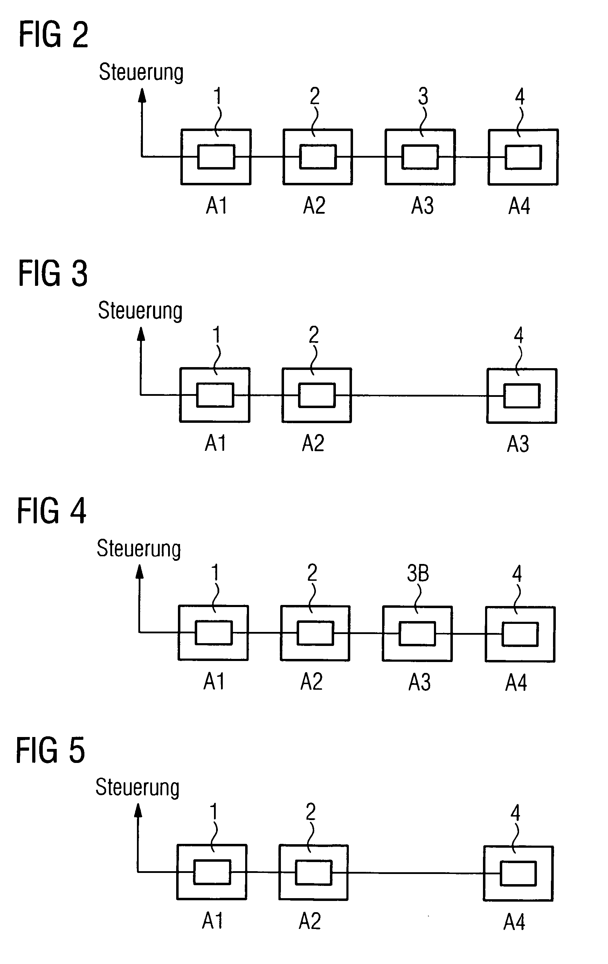

FIG 2 illustriert eine Gruppe von Motorstartern 1, 2, 3, 4 in einem dezentralen Peripheriesystem. Mit Peripherien wird im folgenden Schaltgeräte oder Module für einen modular aufgebauten Motorstarter gemeint. Beispiele von Peripherien sind digitale sowie analoge Ein- und Ausgänge, Erdschlüsse, Strom-und Spannungsmesseinrichtungen und die Grundgeräte für Motorstarter oder Schalter.

In der Schaltgerätesteuerung 10 gibt es eine eindeutige Abbildung zwischen jeder Peripheriebaugruppe 1, 2, 3, 4, ... und ihrer Adresse A1, A2, A3, A4, ...

Die einzigen Adressen können aus einer Reihe von E/A - Adressen bestehen. Zum Beispiel A1 würde die E/A -Adressen 4.0 bis 4.3 entsprechen, A2 4.4 bis 4.7, A3 5.0 bis 5.3 und A4 5.4 bis 5.7.

Bei den heutigen Lösungen wird durch die Steckplatzorientierung der Peripherien die Adresse der nachfolgenden Peripheriebaugruppen bestimmt.

Das heißt, wenn eine Peripheriebaugruppe entfällt, wird die Adresse der nachfolgenden Peripheriebaugruppen um das Prozessabbild des entfallenden Moduls verrutscht. Das ist in FIG 3 illustriert. Das Schaltgerät ist mit Peripherie 3 hardwaremäßig nicht bestückt, daher bekommt Peripherie 4 die nach der zuvor bestückten Stelle (Peripherie 2, Adresse A2) die nächste freie Adresse, also die Adresse A3.

Wenn beispielsweise aus einer Gruppe von Motorstartern eines dezentralen Peripheriesystems ein Motorstarter entfernt wird, verändern sich automatisch die Adressen der nachfolgenden Motorstarter.

Eine Alternative stellt ein physikalisches Platzhaltermodul 3B dar, wie in FIG 4 gezeigt. So wird z.B. bei den digitalen Ein- oder Ausgabemodulen ein spezielles Platzhaltermodul 3B angeboten, das anstelle des sonst üblichen Moduls gesteckt wird und die Adresse der nicht bestückten Peripherie bekommt. Der Steckplatz ist demzufolge nicht mehr hardwaremäßig unbestückt.

Gemäß einem Aspekt der Erfindung wird anstatt eines Platzhaltermoduls 3B nun eine softwaretechnische Lösung eingesetzt.

In der Schaltgerätesteuerung 10, die ausgebildet ist, die Steuerung- bzw. Hardwarekonfigurationen durchzuführen, ist es demzufolge möglich, neben den Geräteeigenschaften wie z.B. Direktstarter oder Wendestarter und Anlaufart auch die Option "nicht bestückt" auszuwählen. Es ist keine weitere Hardware-Komponente notwendig; das Platzhaltermodul 3B kann somit entfallen.

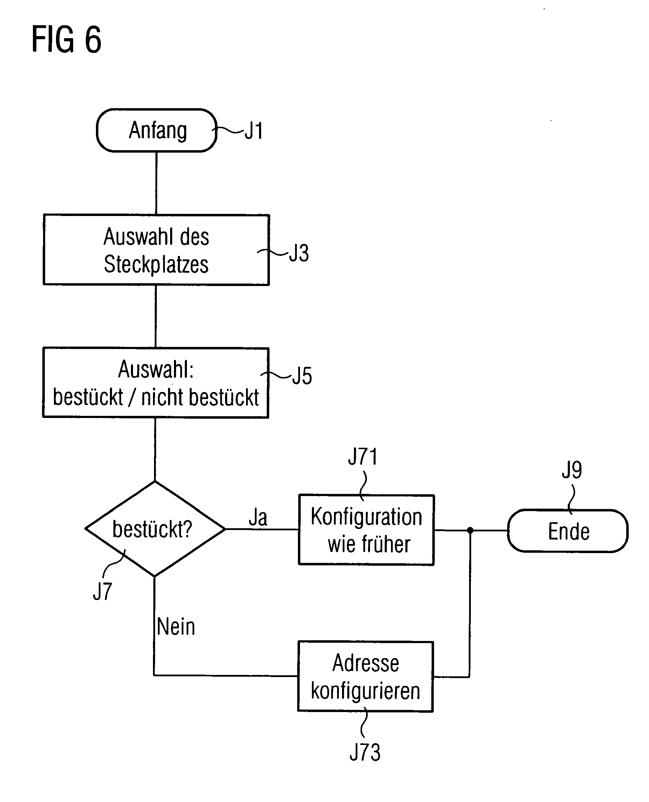

FIG 6 illustriert den Ablauf der Parametrierung der Peripheriebaugruppe in der Steuerungsprojektierung. Nach Anfang (J1) wird im Schritt J3 der zu konfigurierende Steckplatz ausgewählt. Im Schritt J5 kann der Benutzer wählen, ob der Steckplatz bestückt oder nicht bestückt ist.

Im Schritt J7 wird die Angabe ausgewertet. Wenn der Steckplatz bestückt ist, wird im Schritt J71 die Peripherie konfiguriert, wie z.B. bei Motorstartern "Direktstarter" oder "Wendestarter". Wenn der Steckplatz nicht bestückt ist, kann im Schritt J73 die Adresse des Steckplatzes konfiguriert bzw. verifiziert werden. Nach Ende (J9) der Konfiguration kann ein nächster Steckplatz konfiguriert werden.

Der Speicher 12 der Schaltgerätesteuerung 10 dient in diesem Fall als Adress-Schieberegister. Die Option, dass ein Steckplatz als "nicht belegt" ist, belegt die Adressen des nicht gesteckten Moduls und gewährleistet somit, dass alle nachfolgenden Peripherien immer noch die gleiche Adresse haben.

Der als "nicht bestückt" parametrierte Steckplatz belegt das für die Peripheriebaugruppe obligatorische Prozessabbild, so dass die nachfolgende Peripherie nach wie vor die gleichen Ein- und Ausgangsadressen zugeteilt bekommt.

Der Vorteil auf der Anwenderseite liegt darin, dass die Standardisierung des Aufbaus beibehalten werden kann. Aufwände für Adressverschiebungen in einem Steuerungsprogramm und unnötig bestückte Hardware, sowohl als Peripheriemodul oder Platzhaltermodul für nicht benötigte Funktion, können entfallen.

Weitere Vorteile der Erfindung sind das einfache Austauschen oder Entfernen von Geräten, bei Vereinfachung des modularen Aufbaus bzw. Systembaukastens. Ein vielseitiger Einsatz für verschiedenste Geräte wird auch ermöglicht.

## Patentansprüche

1. Schaltgerätesteuerung (10), insbesondere für ein dezentrales Peripheriesystem, mit mindestens einem Prozessor (11), mindestens einem Speicher (12) für aktuelle Konfigurationen, und mit mindestens einer Schaltgerätkommunikationsschnittstelle (15), **dadurch gekennzeichnet, dass** die Schaltgerätesteuerung (10) ausgebildet ist, eine Peripherieadresse (A3) als nicht bestückt zu identifizieren und in den Speicher (12) für aktuelle Konfigurationen zu speichern, wobei die Adresse (A3) für ein nicht bestücktes Gerät reserviert wird.

2. Schaltgerätesteuerung (10) nach Anspruch 1, **wobe**i die Steuerung mindestens eine Benutzerschnittstelle (13) aufweist, und wobei der Prozessor (11) ausgebildet ist, die Adresse (A3) über die Benutzerschnittstelle (13) auswählen zu lassen.

3. Schaltgerätesteuerung (10) nach Anspruch 1 oder 2, **wobei** die Steuerung mindestens eine Benutzerschnittstelle (13) aufweist, und wobei der Prozessor (11) ausgebildet ist, die Adresse als nicht Bestückt (A3) über die Benutzerschnittstelle (13) auswählen zu lassen.

4. Schaltgerätesteuerung (10) Anspruch 3, **wobei** der Prozessor (11) ausgebildet ist, die Adresse (A3) über eine Menüstruktur (J3, J5) als nicht bestückt auszuwählen oder auswählen zu lassen.

5. Schaltgerätesteuerung (10) nach Anspruch 1 oder 2, **wobei** der Prozessor (11) ausgebildet ist, die Adresse als nicht Bestückt (A3) über die Schaltgerätkommunikationsschnittstelle (15) automatisch zu erkennen.

6. Schaltgerätesteuerung (10) nach einem der vorhergehenden Ansprüche, **wobei** die Steuerung (10) mindestens einen Speicher (14) für mögliche Konfigurationen aufweist.

7. Verfahren zur Schaltgerätesteuerung, insbesondere für eine Schaltgerätesteuerung mit einem dezentralen Peripheriesystem, **wobei** das Verfahren den Schritt aufweist, eine Peripherieadresse (A3) als nicht bestückt zu identifizieren und in einen Speicher (12) für aktuelle Konfigurationen zu speichern, wobei die Adresse (A3) für ein nicht bestücktes Gerät reserviert wird.

8. Schaltgerät mit einer Anzahl von Peripherien (1, 2, 3, 4) und mit einer Schaltgerätesteuerung (10) mit einem Speicher (12) für die Adressierung (A1, A2, A3, A4) der Peripherien (1, 2, 3, 4), wobei die Schaltgerätesteuerung (10) insbesondere eine nach einem der vorhergehenden Ansprüche ist, **dadurch gekennzeichnet, dass** die Schaltgerätesteuerung (10) ausgebildet ist, mit einer nicht voll bestückten Schaltgeräte- bzw. Motorstarterkonfiguration eine statische Adressierung (A1, A2, A3, A4) für die Peripherien (1, 2, 4) derart zu benutzen, dass die hardwaremäßig nicht bestückte Adresse (A3) oder die hardwaremäßig nicht bestückten Adressen im Speicher (12) als nicht bestückt gekennzeichnet werden.
